# EUROPÄISCHE PATENTSCHRIFT

(11) **EP 1 687 942 B1**
(45) Veröffentlichungstag und Bekanntmachung des Hinweises auf die Patenterteilung: **22.08.2007**
(21) Anmeldenummer: 04804550.4
(22) Anmeldetag: 22.11.2004
(51) Int. Cl.: H04L 12/28, H04L 12/403, H04L 29/14, H04L 12/24, G06F 11/22, H04L 12/26, G05B 19/042

(54) **BEHANDLUNG VON EINER UNTERBRECHUNG EINER KOMMUNIKATIONSVERBINDUNG ZWISCHEN EINEM HAUSGERÄT UND EINER STEUEREINRICHTUNG IN EINEM LOKALEN NETZWERK**
PROCESSING OF AN INTERRUPTION TO A COMMUNICATION CONNECTION BETWEEN A DOMESTIC APPLIANCE AND A CONTROLLER IN A LOCAL NETWORK
TRAITEMENT DE L'INTERRUPTION D'UNE LIAISON DE COMMUNICATION ENTRE UN APPAREIL MENAGER ET UN DISPOSITIF DE COMMANDE DANS UN RESEAU LOCAL

(30) Priorität: 21.11.2003 DE 10354498
(43) Veröffentlichungstag der Anmeldung: 09.08.2006
(73) Patentinhaber: BSH Bosch und Siemens Hausgeräte GmbH, 81739 München (DE)
(72) Erfinder: BUCHNER, Theo, 93333 Neustadt (DE); WERKMANN, Horst, 85276 Pfaffenhofen/Ilm (DE)
(86) Internationale Anmeldenummer: PCT/EP2004/053045
(87) Internationale Veröffentlichungsnummer: WO 2005/050916

(56) Entgegenhaltungen:
- EP-A- 0 357 992
- EP-A- 0 755 011
- WO-A-02/097555
- US-A1- 2003 187 972

## Beschreibung

Die Erfindung bezieht sich auf ein Verfahren und eine Vorrichtung zum Ermitteln einer Unterbrechung einer Kommunikationsverbindung zwischen einem Hausgerät, welches in einem lokalen Netz, mit dem gegebenenfalls weitere Hausgeräte verbunden sind, an einer eine Busleitungs-Steuereinrichtung umfassenden Busleitungsanordnung angeschlossen ist, und der betreffenden Busleitungs-Steuereinrichtung, zu der von dem betreffenden Hausgerät Informationen über dessen jeweiligen Gerätezustand übertragen werden, und zur Wiederaufnahme solcher Übertragungen auf eine Wiederherstellung der Kommunikationsverbindung nach Beheben der Unterbrechung, wobei dem betreffenden Hausgerät zu seiner Identifizierung in dem lokalen Netz eine eindeutige Adresse zugeteilt wird.

Ein Verfahren und eine Vorrichtung zur Übertragung von Informationssignalen bzw. Daten zwischen einem Hausgerät und einer Busleitungs-Steuereinrichtung, die an einer Busleitungsanordnung angeschlossen ist, sind an anderen Stellen bereits beschrieben (siehe z.B. DE 100 56 492 A1 sowie DE 103 13 360 A1). Über die Ermittlung von Unterbrechungen der Kommunikationsverbindungen von und zu den Hausgeräten sowie über Maßnahmen zur Wiederaufnahme der Übertragung von Informationssignalen und Daten von und zu solchen Hausgeräten nach Behebung der Unterbrechungen ist in dem betreffenden Zusammenhang indessen nichts näher bekannt.

Unterbrechungen von Kommunikationsverbindungen von bzw. zu Hausgeräten, die an einem lokalen Netz einer eine Busleitungs-Steuereinrichtung umfassenden Busleitungsanordnung angeschlossen sind, können durch Kurzzeitstörungen bzw. durch bauliche Veränderungen oder durch Langzeitstörungen hervorgerufen sein. Wenn in dem betreffenden lokalen Netz von den in diesem enthaltenen Hausgeräten Informationen bzw. Daten über deren jeweiligen Gerätezustand ohne eine gesonderte Anfrage selbständig übertragen werden (siehe z.B. DE 102 60 143 A1), um die Belastung des lokalen Netzes möglichst gering zu halten, dann steht der Einrichtung, zu der die betreffenden Informationen bzw. Daten übertragen werden - das ist in der Regel die erwähnte Busleitungs-Steuereinrichtung, die an der Busleitungsanordnung angeschlossen ist, mit der das erwähnte lokale Netz verbunden ist - im Falle des Auftretens einer Unterbrechung der jeweiligen Kommunikationsverbindung keinerlei Meldung über die betreffende Unterbrechung zur Verfügung. Grundsätzlich wäre es zwar möglich, die Informations- bzw. Datenübertragung vom jeweiligen Hausgerät auf entsprechende Anfragen hin vorzunehmen, die an die betreffenden Hausgeräte zu richten wären. Dies würde jedoch zu einer erheblichen unerwünschten Belastung des erwähnten lokalen Netzes und der zu diesem gehörenden Busleitungsanordnung führen. Deshalb kommt eine solche Maßnahme zum Ermitteln von Unterbrechungen von Kommunikationsverbindungen von und zu Hausgeräten an sich nicht in Betracht.
Ferner offenbart die Druckschrift EP0 755 011 ein Verfahren zum Feststellen und Melden von Fehlern in elektronischen Auszeichnungssystemen.

Der Erfindung liegt daher die Aufgabe zugrunde, einen Weg zu zeigen, wie bei einem Verfahren und einer Vorrichtung der eingangs genannten Art auf relativ einfache Weise und mit einer besonders geringen Belastung des lokalen Netzes und der zu diesem gehörenden Busleitungsanordnung ausgekommen werden kann, um eine Unterbrechung einer Kommunikationsverbindung zwischen einem Hausgerät, welches in dem lokalen Netzwerk an einer eine Busleitungs-Steuereinrichtung umfassenden Busleitungsanordnung angeschlossen ist, und der betreffenden Busleitungs-Steuereinriditung zu ermitteln und überdies Informationsübertragungen von und zu dem betreffenden Hausgerät auf eine Wiederherstellung der Kommunikationsverbindung nach der betreffenden Unterbrechung wieder aufzunehmen.

Gelöst wird die vorstehend aufgezeigte Aufgabe bei einem Verfahren der eingangs genannten Art erfindungsgemäß dadurch, dass bei Übertragung der genannten Informationen lediglich in Form von Änderungsinformationen von dem genannten einen Hausgerät über dessen jeweiligen Gerätezustand zu der Busleitungs-Steuereinrichtung von der Busleitungs-Steuereinrichtung ein bestimmtes festgelegtes Kriterium des genannten Hausgeräts zeitlich wiederholt abgefragt wird, woraufhin bei Bestehen der Kommunikationsverbindung mit dem betreffenden Hausgerät von diesem zu der Busleitungs-Steuereinrichtung ein Antwortsignal übertragen wird,

dass das Ausbleiben eines solchen Antwortsignals als Unterbrechung der Kommunikationsverbindung mit dem betreffenden Hausgerät gewertet wird,

dass daraufhin von der Busleitungs-Steuereinrichtung eine Sud-Operation nach dem betreffenden Hausgerät solange durchgeführt wird, bis von diesem wieder ein Antwortsignal erhalten wird,

und dass anschließend dann die dem vorliegenden aktuellen Gerätezustand des betreffenden Hausgeräts entsprechenden Informationen zu der Busleitungs-Steuereinrichtung übertragen werden.

Die Erfindung bringt den Vorteil mit sich, dass zum einen die Belastung des lokalen Netzes samt der Busleitungsanordnung dadurch gering gehalten werden kann, dass von dem betreffenden Hausgerät lediglich Änderungsinformationen über dessen jeweiligen Gerätezustand zur Busleitungs-Steuereinrichtung übertragen werden, und dass zum anderen mit einer relativ geringen Belastung des betreffenden lokalen Netzes und der Busleitungsanordnung ausgekommen werden kann, um das Vorhandensein einer Unterbrechung der Kommunikationsverbindung mit dem betreffenden Hausgerät zu ermitteln und eine Wiederaufnahme von Informationsübertragungen von und zu dem betreffenden Hausgerät vorzunehmen. Dadurch, dass von der Busleitungs-Steuereinrichtung lediglich ein bestimmtes festgelegtes Kriterium des genannten Hausgerätes zeitlich wiederholt abgefragt wird, lässt sich der Belastungsumfang des lokalen Netzes und der Busleitungsanordnung relativ gering halten, da nicht unterschiedliche Gerätezustände des betreffenden Hausgerätes abgefragt werden, was einen höheren Abfrageaufwand und damit eine höhere Belastung des lokalen Netzes und der Busleitungsanordnung bedeutete. Auch die bei Ausbleiben eines Antwortsignals vom Hausgerät hin durchgeführte Suchoperation nach dem betreffenden Hausgerät innerhalb des lokalen Netzes bringt keine allzu starke Belastung des betreffenden lokalen Netzes und der Busleitungsanordnung mit sich. Im Zuge der betreffenden Suchoperation kann die Busleitungs-Steuereinrichtung ein bestimmtes Abfragesignal aussenden, welches dann lediglich von demjenigen Hausgerät beantwortet wird, zu dem hin die Kommunikationsverbindung unterbrochen war. Das betreffende Abfragesignal, welches gegebenenfalls das gleiche sein kann, mit der von der Busleitungs-Steuereinrichtung ein bestimmtes festgelegtes Kriterium des genannten Hausgeräts zeitlich wiederholt abgefragt wird, kann von dem betreffenden Hausgerät, dessen Kommunikationsverbindung unterbrochen war, beispielsweise aus dem Umstand heraus erkannt werden, dass dieses Abfragesignal während einer festgelegten Zeitspanne in dem Hausgerät nicht aufgenommen werden konnte.

Schließlich lässt sich die Busleitungs-Steuereinrichtung anschließend auf den aktuellen Gerätezustand des betrachteten Hausgeräts dadurch synchronisieren, dass ihr die dem aktuellen Gerätezustand des betreffenden Hausgeräts zu diesem Zeitpunkt entsprechenden Informationen übertragen werden.

Vorzugsweise werden sowohl die Abfrage des bestimmten festgelegten Kriteriums des genannten Hausgeräts als auch die genannte Sudoperation zyklisch durchgeführt, beispielsweise jede Minute. Als bestimmtes festgelegtes Kriterium des genannten Hausgeräts wird vorzugsweise dessen jeweiliger Hauptgerätezustand abgefragt, also ob das betreffende Hausgerät eingeschaltet oder ausgeschaltet ist. Dies bedeutet eine besonders geringe Abfragebelastung des lokalen Netzes und der zugehörigen Busleitungsanordnung, da lediglich ein EIN-Zustand oder AUS-Zustand abgefragt wird und ein entsprechendes Antwortsignal (zum Beispiel 1 oder 0) zu übertragen ist.

Nachdem damit zu rechnen ist, dass es sich bei einer Unterbrechung der Kommunikationsverbindung zwischen dem erwähnten Hausgerät und der Busleitungs-Steuereinrichtung um eine längerfristige Unterbrechung handeln kann, die beispielsweise mehrere Stunden oder Tage andauert, und überdies an dem lokalen Netz, an dem das betreffende Hausgerät angeschlossen ist, zwischenzeitlich ein oder mehrere weitere Hausgeräte angeschlossen sein können, kann es vorkommen, dass im Zuge einer Registrierungsprozedur zur Registrierung des jeweiligen weiteren Hausgeräts in dem lokalen Netz und damit an der Busleitungsanordnung eine Adresse vergeben wird, die bisher dem Hausgerät zugeteilt worden war, dessen Kommunikationsverbindung nunmehr unterbrochen ist. Eine solche Registrierungsprozedur ist beispielsweise an der eingangs erwähnten anderen Stelle (DE 103 13 360 A1) angegeben. In diesem Falle ist es vorteilhaft, dass die Übertragung der den aktuellen Gerätezustand des genannten Hausgeräts betreffenden Informationen zu der Busleitungs-Steuereinrichtung erst vorgenommen wird, nachdem dem betreffenden Hausgerät durch eine Registrierungsprozedur in dem lokalen Netz ein zu dieser Zeit eindeutige Adresse zugeteilt ist. Dadurch ist Eindeutigkeit hinsichtlich der Adressierung der zu dem erwähnten lokalen Netz gehörenden Hausgeräte gegeben.

Zum anderen wird die oben angegebene Aufgabe bei einer Vorrichtung der eingangs genannten Art erfindungsgemäß dadurch gelöst, dass bei Übertragung der genannten Informationen lediglich in Form von Änderungsinformationen von dem genannten einen Hausgerät über dessen jeweiligen Gerätezustand zu der Busleitungs-Steuereinrichtung die Busleitungs-Steuereinrichtung eine ein bestimmtes festgelegtes Kriterium des genannten Hausgerätes zeitlich wiederholt abfragende Busleitungs-Steuereinrichtung ist, die bei Vorhandensein einer Kommunikationsverbindung zu dem betreffenden Hausgerät von diesem jeweils ein Antwortsignal aufnimmt,

dass die genannte Busleitungs-Steuereinrichtung eine Bewertungseinrichtung umfasst, die auf das Ausbleiben eines Antwortsignals hin ein eine Unterbrechung der Kommunikationsverbindung zu dem betreffenden Hausgerät anzeigendes Meldesignal bereitstellt,

und dass die Busleitungs-Steuereinrichtung ferner so ausgebildet ist, dass sie auf das genannte Meldesignal hin eine Suchoperation nach dem betreffenden Hausgerät solange durchführt, bis von diesem wieder ein Antwortsignal aufnehmbar ist,

und anschließend dem dann vorliegenden aktuellen Gerätezustand des betreffenden Hausgeräts entsprechende Informationen aufzunehmen gestattet.

Hierdurch ergibt sich der Vorteil eines insgesamt besonders geringen Vorrichtungsaufwands, um die Belastung des lokalen Netzes und der Busleitungsanordnung möglichst gering zu halten.

Zweckmäßgerweise ist die Busleitungs-Steuereinrichtung eine das genannte bestimmte festgelegte Kriterium des betreffenden Hausgeräts zyklisch abfragende und auch die genannte Suchoperation zyklisch durchführende Steuereinrichtung. Hierdurch ergibt sich ein besonders geringer Steuerungsaufwand.

Vorzugsweise ist die betreffende Busleitungs-Steuereiniichtung eine den Gerätehauptzustand des genannten Hausgeräts zyklisch wiederholt abfragende Steuereinrichtung. Eine solche Steuereinrichtung verursacht in vorteilhafter Weise eine besonders geringe Belastung des lokalen Netzwerkes und der zu diesem gehörenden Busleitungsanordnung.

Um die oben erwähnte Registrierungsprozedur mit besonders geringem Aufwand durchführen zu können, ist die Busleitungs-Steuereinrichtung zweckmäßigerweise so ausgebildet, dass sie vor Aufnahme der Informationen, die dem genannten aktuellen Zustand des betreffenden Hausgeräts entsprechen, dieses Hausgerät in eine Registrierungsprozedur einbezieht, durch die das betreffende Hausgerät in dem lokalen Netz eine zu dieser Zeit eindeutige Adresse erhält, unter der sie in dem lokalen Netz erreichbar ist.

Anhand von Zeichnungen wird die Erfindung nachstehend an einem Ausführungsbeispiel näher erläutert.

Fig. 1 zeigt in einer schematischen Darstellung ein eine Mehrzahl von Hausgeräten enthaltendes örtliches Netz mit einer eine Busleitungs-Steuereinrichtung umfassenden Busleitungsanordnung, mit der über eine Übergangseinrichtung ein weiteres Kommunikationsnetz verbunden ist, mit welchem beispielsweise eine durch einen Personalcomputer gebildete Teilnehmerstation verbunden ist.

Fig. 2 veranschaulicht in einer schematischen Darstellung den Ablauf von verschiedenen Vorgängen im Zusammenhang mit einem der in Fig. 1 dargestellten Hausgeräte.

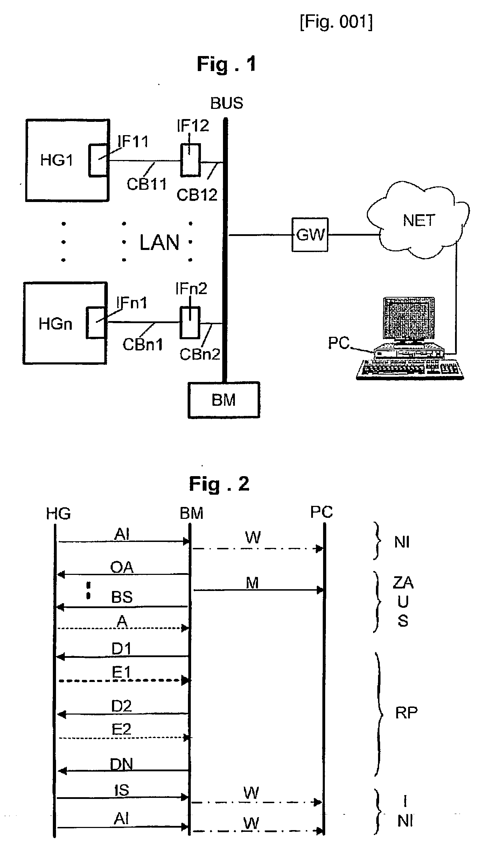

In Fig. 1 ist schematisch eine Mehrzahl von Hausgeräten HG1 bis HGn dargestellt, bei denen es sich um unterschiedliche Hausgeräte ein und desselben Haushalts oder von verschiedenen Haushalten handeln kann, wie um Waschmaschinen, Elektroherde, Geschirrspüler, Mikrowellengeräte, Kühlschränke, Dunstabzugshauben, Klimaanlagen, Kaffeemaschinen, Staubsauger, Kochmulden, Gefrierschränke, etc. Die betreffenden Hausgeräte HG1 bis HGn sind über ihnen zugehörige Schnittstelleneinrichtungen IF11 bis IFn1 mit bidirektional betriebenen Verbindungsleitungen bzw. Anschlussleitungen CB11 bis CBn1 mit weiteren Schnittstelleneinrichtungen IF12 bis IFn2 verbunden, die über entsprechende Verbindungsleitungen CB12 bis CBn2 an einer Busleitungsanordnung BUS angeschlossen sind. Alle diese Verbindungsleitungen und die Busleitungsanordnung stellen ein örtliches Netz LAN dar. An dieser Stelle sei noch angemerkt, dass das örtliche Netz LAN ein drahtloses Netz (Funknetz) oder ein drahtgebundenes Netz sein kann, beispielsweise das übliche Stromversorgungsnetz der Hausgeräte.

Mit der erwähnten Busleitungsanordnung BUS ist eine Busleitungs-Steuereinrichtung BM verbunden, die auch als Busmaster bezeichnet wird. Diese Busleitungs-Steuereinrichtung BM stellt im vorliegenden Fall den Kommunikationspartner für die Hausgeräte HG1 bis HGn dar. Zwischen den Hausgeräten HG1 bis HGn und der Busleitungs-Steuereinrichtung BM, finden im Rahmen von Kommunikationen Informationsübertragungen statt. So werden von der Busleitungs-Steuereinrichtung BM an die einzelnen Hausgeräte HG1 bis HGn Anfragen gerichtet und auf diese oder auch ohne diese werden in den Hausgeräten HG1 bis HGn zu der Busleitungs-Steuereinrichtung Informationssignale bzw. Daten übertragen. Im letzteren Falle werden beispielsweise Gerätezustandsdaten, genauer gesagt Änderungsinformationen von den einzelnen Hausgeräten HG1 bis HGn zur Busleitungs-Steuereinrichtung BM übertragen.

Im Hinblick auf die Busleitungs-Steuereinrichtung BM sei hier noch angemerkt, dass diese beispielsweise ein zum Betrieb von Busleitungsanordnungen verwendeter Busleitungs-Controller sein kann. Überdies kann die betreffende Busleitungs-Steuereinrichtung zusammen mit den Sdmittstelleneinrichtungen IF12 bis IFn2 auch durch sogenannte Buskoppler gebildet sein, wie dies bereits an anderer Stelle beschrieben ist (siehe DE 103 13 360 A1).

Mit der in Fig. 1 dargestellten Busleitungsanordnung BUS ist ein weiteres Netz NET über eine Zugangseinrichtung GW verbunden, die im Englischen als Gateway bezeichnet wird. An dem weiteren Netz NET ist im vorliegenden Fall beispielsweise ein Personalcomputer PC als eine Kommunikationsstation eines Benutzers des oder der Hausgeräte HG1 bis HGn angeschlossen. Bei dem weiteren Netz NET kann es sich beispielsweise um das Internet oder um ein gesondertes örtliches Netz, wie beispielsweise ein Ethernet oder um das GSM- Netz handeln. Im Übrigen können weitere Kommunikationsstationen an dem betreffenden weiteren Netz NET angeschlossen sein, die verschiedenen Hausgeräten zugeordnet sind. Überdies können auch mehrere weitere Netze mit zugehörigen Kommunikationsstationen über eigene Zugangseinrichtungen an der Busleitungsanordnung BUS angeschlossen sein.

Die von Hausgeräten HG1 bis HGn der Busleitungs-Steuereinrichtung BM zur Verfügung gestellten Informationen werden hier von dieser über die Übergangseinrichtung GW und das weitere Netz NET dem Personalcomputer PC zur entsprechenden Informationsdarstellung zugeführt.

Im vorliegenden Falle arbeitet die in Fig. 1 schematisch dargestellte Vorrichtung so, dass zu der Busleitungs-Steuereinrichtung BM von den einzelnen Hausgeräten HG1 bis HGn jeweils nur Zustandsänderungen des jeweiligen Gerätezustands betreffende Informationssignale bzw. Daten übertragen werden. Dadurch wird die Datenbelastung auf der Busleitungsanordnung BUS relativ gering gehalten. Entsprechende Änderungsinformationssignale bzw. Daten werden von der Busleitungs-Steuereinrichtung BM entweder auf gesonderte Anfrage oder gezielt dem jeweils in Frage kommenden Benutzer bzw. im vorliegenden Fall dessen Personalcomputer, wie dem Personalcomputer PC über die Übergangseinrichtung GW und das weitere Netz NET zur Verfügung gestellt.

Wenn bei der vorstehend erläuterten Konfiguration eine Störung bzw. eine Unterbrechung - im folgenden nur kurz Unterbrechung genannt - der das jeweilige Hausgerät HG1 bis HGn mit der Busleitungsanordnung BUS verbindenden Anschlussleitungen CB11, CB12 bzw. CBn1, CBn2 oder der Busleitungsanordnung BUS selbst auftritt, dann können weder die Busleitungs-Steuereinrichtung BM noch der Benutzer des Personalcomputers PC daraus einen Störungsfall erkennen. Um dieses Problem zu lösen, ist die vorliegende Erfindung geschaffen worden, die nunmehr anhand der schematischen Darstellung von Fig. 2 näher erläutert wird.

Bevor auf die vorliegende Erfindung näher eingegangen wird, sei zunächst kurz erläutert, wie die in Fig. 1 dargestellte Vorrichtung im Normalbetrieb arbeitet.

Nach Anschließen eines Hausgeräts an der Busleitungsanordnung BUS wird diesem Hausgerät zunächst im Zuge seiner Registrierung innerhalb des die Busleitungsanordnung BUS umfassenden lokalen Netzes LAN eine eindeutige Haugeräte adresse von der Busleitungs-Steuereinrichtung BM zugeteilt. Die dazu erfolgende Adressenvergabe kann beispielsweise so erfolgen, wie dies weiter unten erläutert wird.

Nach der Registrierung des betreffenden Hausgeräts und damit nach der Zuteilung einer eindeutigen Hausgeräteadresse werden dann der Busleitungs-Steuereinrichtung BM verschiedene Informationen bzw. Daten das Hausgerät betreffend von diesem übertragen, wie der Hausgerätetyp, z.B. Waschmaschine, die Ausführungsform des betreffenden Hausgerätetyps, die Gerätenummer des Hausgeräts, etc. Alle diese Informationen bzw. Daten werden in der Busleitungs-Steuereinrichtung BM für unterschiedlichste Aufgaben festgehalten, wie beispielsweise für die Durchführung von Fernabfragen bzw. Ferndiagnosen bezüglich des betreffenden Hausgeräts.

In Fig. 2 sind drei senkrecht verlaufende Balkenlinien dargestellt, die ein mit HG bezeichnetes Hausgerät, die in Fig. 1 dargestellte Busleitungs-Steuereinrichtung BM und den ebenfalls in Fig. 1 dargestellten Personalcomputer PC symbolisieren. Zwischen den betreffenden Balkenlinien eingetragene Pfeillinien bezeichnen jeweils ablaufende Vorgänge oder abgegebene Meldungen.

In dem im oberen Bereich von Fig. 2 ist ein Bereich mit normaler InformationsÜbertragung NI bezeichneten Bereich ist veranschaulicht, bei dem von dem betreffenden Hausgerät HG zur Busleitungs-Steuereinrichtung BM lediglich Änderungsinformationen AI des jeweiligen Gerätezustands des betreffenden Hausgeräts HG übertragen werden. Diese Änderungsinformationen werden gegebenenfalls zu dem Personalcomputer PC weitergeleitet W.

In dem in Fig. 2 von oben aus betrachtet zweiten Bereich sind Vorgänge veranschaulicht, die zusätzlich zu der normalen Informationsübertragung NI zwischen dem betreffenden Hausgerät HG und der Busleitungs-Steuereinrichitung MB ablaufen. Gemäß diesen zusätzlichen Vorgängen erfolgt eine zyklische Abfrage ZA des Hausgeräts HG durch die Busleitungs-Steuereinrichtung BM nach einem bestimmten festgelegten Kriterium, insbesondere nach dem jeweiligen Gerätehauptzustand (EIN, AUS). Bleibt eine solche zyklische Abfrage ohne eine Antwort OA, so wird dies in der Busleitungs-Steuereinrichtung MB als Unterbrechung U der Kommunikationsverbindung mit dem betreffenden Hausgerät HG bewertet, und zwar beispielsweise durch eine eine Meldung abgebende gesonderte Bewertungseinrichtung. Daraufhin kann gegebenenfalls eine entsprechende Meldung M an den zugehörigen Personalcomputer PC abgegeben werden, gemäß der sich nämlich das betreffende Hausgerät HG sozusagen "offline" befindet, also eine Unterbrechung U zu diesem Hausgerät HG hin vorliegt.

Daraufhin erfolgt eine Suche S nach dem betreffenden Hausgerät HG in dem in Fig. 1 dargestellten lokalen Netz LAN. Diese Suche, die wie die zuvor erwähnte Abfrage zyklisch, beispielsweise jede Minute, erfolgen kann, wird solange fortgesetzt, bis eine Antwort A von dem betreffenden Hausgerät HG vorliegt. An dieser Stelle sei angemer kt, dass von der Busleitungs-Steuereinrichtung BM im Zuge der erwähnten Suche ein generelles Anfragesignal BS (Broadcast-Signal im Englischen) ausgesendet wird, mit dem beispielsweise unter Hinzunahme der Gerätenummer des gewissermaßen "verloren gegangenen" Hausgeräts HG ganz gezielt nach diesem gesucht wird, und zwar solange, bis das gesuchte Hausgerät HG antwortet, nach dem die Unterbrechung U behoben ist.

Eine andere Möglichkeit der Suche S und Ermittlung des "verloren gegangenen" Hausgeräts besteht darin, dass das betreffende Hausgerät HG, das ja seit Bestehen der Unterbrechung U seiner Kommunikationsverbindung keine Abfragesignale mehr erhalten hat, aus dieser Kenntnis heraus allein auf das bei ihm nach Behebung der betreffenden Unterbrechung eintreffende generelle Abfragesignal hin ein Antwortsignal A abgibt, welches wiederum die Busleitungs-Steuereinrichtung BM erkennen lässt, dass das zuvor "verloren gegangene" Hausgerät HG wieder gefunden worden ist.

Auf die vorstehend erläuterten Vorgänge hin läuft in der in Fig. 1 dargestellten Vorrichtung sodann eine Registrierungsprozedur RP ab, wie sie in Fig. 2 im dritten Bereich von oben veranschaulicht ist. Im Zuge dieser Registrierungsprozedur RP erfolgt eine Adressenvergabe, durch die dem Hausgerät HG eine zu dieser Zeit eindeutige Adresse zugewiesen wird. Wie oben erwähnt, ist in dem lokalen Netz LAN jedem Hausgerät eine eindeutige Adresse zugewiesen. Wenn ein solches Hausgerät infolge einer Unterbredung oder Störung seiner Kommunikationsverbindung mit dem betreffenden lokalen Netz LAN nicht mehr erreichbar ist, kann es vorkommen, dass die diesem Hausgerät zugewiesene Adresse zwischenzeitlich einem anderen Hausgerät zugewiesen wird, welches als neues Hausgerät an dem betreffenden lokalen Netz angeschlossen ist. Aus diesem Grunde wird gemäß der vorliegenden Erfindung im Rahmen der erwähnten Registrierungsprozedur RP dem Hausgerät HG, dessen Kommunikationsverbindung zuvor unterbrochen bzw. gestört war, nunmehr eine zu dieser Zeit aktuelle Adresse zugewiesen. Die damit verbundene Adressenvergabe kann in der Weise erfolgen, wie dies an der eingangs erwähnten anderen Stelle bereits beschrieben ist (DE 103 13 360 A1).

Im Zuge dieser Adressenvergabe erzeugt die Busleitungs-Steuereinrichtung BM Adressen und gibt diese über die Busleitungsanordnung BUS ab. Ist eine solche Adresse D1, D2 bereits für ein Hausgerät vergeben, so wird dies der Busleitungs-Steuereinrichtung BM gewissermaßen als "Einspruch" E1, E2 gemeldet. Daraufhin versucht es die betreffende Busleitungs-Steuereinrichtung BM mit einer anderen Adresse DN bis schließlich eine "positive" Antwort vorliegt, also kein "Einspruch" erhoben wird. Diese Adresse wird dann dem Hausgerät HG in dem Netz LAN als Hausgeräte adresse zugewiesen, unter der das betreffende Hausgerät in dem lokalen Netz LAN eindeutig erreichbar ist. Diese Adressenvergabe entspricht somit einem Adressensudiverfahren, das im Englischen als Trial and Error bezeichnet wird. An dieser Stelle sei angemerkt, dass die Adressenvergabe nicht nur in der zuvor erläuterten Art und Weise erfolgen kann, sondern dass sie auch in einer ganz anderen Art und Weise ablaufen kann. So können die betreffende Adressenvergabe und damit die Registrierung der einzelnen Hausgeräte beispielsweise unter Verwendung einer an der Busleitungsanordnung BUS angeschlossenen zentralen Adressenvergabeeinrichtung ablaufen.

In Fig. 2 sind in dem mit Registrierungsprozedur bezeichneten Bereich zwei Versuche einer Adressenvergabe mit Ablehnung der jeweiligen Adresse angedeutet. Erst der dritte Versuch einer Adressenvergabe führt ohne eine Ablehnung zum Erfolg, so dass nunmehr dem Hausgerät HG eine Adresse zugewiesen ist, die es in dem lokalen Netz LAN eindeutig bezeichnet.

Nachdem die Unterbrechung U der Kommunikationsverbindung mit dem betreffenden Hausgerät HG behoben und dem betreffenden Hausgerät eine aktuelle Adresse DN zugewiesen worden ist, erfolgt nunmehr noch eine Aktualisierung des Informationsstandes I in der Busleitungs-Steuereinrichtung BM bzw. im Busmaster und anschließend daran eine normale Informationsübertragung NI, von der im oberen Teil der Fig. 2 ausgegangen worden ist. Diese im untersten Bereich der Fig. 2 dargestellten Verhältnisse bedeuten zunächst eine Aktualisierung und damit Synchronisierung des Informationsstandes der Busleitungs-Steuereinrichtung BM durch das Hausgerät HG mit der gegebenenfalls erfolgenden Weiterleitung W der betreffenden Aktualisierungsinformation IS zum Personalcomputer PC und sodann die anschließende Übertragung von Änderungsinformationen AI von dem betreffenden Hausgerät HG zu der Busleitungs-Steuereinrichtung BM und gegebenenfalls die Weiterleitung W dieser Information zu dem Personalcomputer PC. Dies bedeutet, dass die Busleitungs-Steuereinrichtung BM erst nach der zuvor durchgeführten Registrierungsprozedur RP wieder Informationen von dem betreffenden Hausgerät HG aufzunehmen gestattet.

Die zyklische Abfrage ZA des betreffenden Hausgeräts HG wird nun auch wieder aufgenommen.

Durch die vorstehend erläuterten Maßnahmen erfolgen also nach Behebung einer Unterbrechung U oder Störung einer Kommunikationsverbindung mit dem Hausgerät HG eine Neuanmeldung und eine Synchronisation zwischen diesem Hausgerät HG und der Busleitungs-Steuereinrichtung BM. Damit erholt sich das lokale Netz LAN zwischen Hausgerät HG und der Busleitungs-Steuereinrichtung BM gewissermaßen automatisch von der erwähnten Unterbrechung U bzw. Störung; es erfolgt also bezüglich der Unterbrechung U oder Störung eine Selbstheilung.

Durch die vorliegende Erfindung kann somit der den Personalcomputer gemäß Fig. 1 benutzende Benutzer durch die Busleitungs-Steuereinrichtung BM sehr zeitnah über den wirklichen Zustand des Hausgeräts bzw. der Hausgeräte informiert werden. Dies bedeutet, dass der Benutzer dem System "vertrauen" kann, da er über dessen tatsächlichen Zustand aktuell informiert wird. Das Gesamtsystem reagiert dynamisch auf Kommunikationsstörungen bzw. Blockaden und regeneriert sich automatisch ohne Interaktion des jeweiligen Benutzers, wenn die Störung bzw. Unterbrechung U nicht mehr vorhanden ist. Falls der jeweilige Benutzer während der Zeit, während der eine Kommunikationsunterbrechung vorliegt, das System nicht in Anspruch nimmt, bleibt für ihn der "Blackout" unsichtbar. Dies führt zu einer hohen Kundenzufriedenheit, da eine hohe Systemverfügbarkeit vorhanden ist.

## Patentansprüche

1. Verfahren zum Ermitteln einer Unterbrechung einer Kommunikationsverbindung zwischen einem Hausgerät, welches in einem lokalen Netz, mit dem gegebenenfalls weitere Hausgeräte verbunden sind, an einer eine Busleitungs-Steuereinrichtung umfassenden Busleitungsanordnung angeschlossen ist, und der betreffenden Busleitungs-Steuereinrichtung, zu der von dem betreffenden Hausgerät Informationen über dessen jeweiligen Gerätezustand übertragen werden,
und zur Wiederaufnahme solcher Übertragungen auf eine Wiederherstellung der Kommunikationsverbindung nach Behebung der Unterbrechung,
wobei dem betreffenden Hausgerät zu seiner Identifizierung in dem lokalen Netz eine eindeutige Adresse zugeteilt wird, **dadurch gekennzeichnet,**
**dass** bei Übertragung der genannten Informationen lediglich in Form von Änderungsinformationen von dem genannten einen Hausgerät (HG1 bis HGn) über dessen jeweiligen Gerätezustand zu der Busleitungs-Steuereinrichtung (BM) von der Busleitungs-Steuereinrichtung (BM) ein bestimmtes festgelegtes Kriterium des genannten Hausgeräts (HG1 bis HGn) zeitlich wiederholt abgefragt wird, woraufhin bei Bestehen der Kommunikationsverbindung mit dem betreffenden Hausgerät (HG1 bis HGn) von diesem zu der Busleitungs-Steuereinrichtung (BM) ein Antwortsignal übertragen wird,
**dass** das Ausbleiben eines solchen Antwortsignals als Unterbrechung der Kommunikationsverbindung mit dem betreffenden Hausgerät (HG1 bis HGn) bewertet wird, dass daraufhin von der Busleitungs-Steuereinrichtung (BM) eine Suchoperation nach dem betreffenden Hausgerät (HG1 bis HGn), bei der ein generelles Abfragesignal (BS) ausgesendet wird, solange durchgeführt wird, bis von dem betreffenden Hausgerät (HG1 bis HGn) wieder ein Antwortsignal erhalten wird,
und **dass** anschließend dem dann vorliegenden aktuellen Gerätezustand des betreffenden Hausgeräts (HG1 bis HGn) entsprechende Informationen zu der Busleitungs-Steuereinrichtung (BM) übertragen werden.

2. Verfahren nach Anspruch 1, **dadurch gekennzeichnet, dass** die Abfrage des bestimmten festgelegten Kriteriums des genannten Hausgeräts (HG1 bis HGn) zyklisch durchgeführt wird.

3. Verfahren nach Anspruch 1 oder 2, **dadurch gekennzeichnet, dass** als bestimmtes festgelegtes Kriterium des genannten Hausgerätes (HG1 bis HGn) dessen jeweiliger Gerätehauptzustand abgefragt wird.

4. Verfahren nach einem der Ansprüche 1 bis 3, **dadurch gekennzeichnet, dass** die genannte Suchoperation zyklisch durchgeführt wird.

5. Verfahren nach einem der Ansprüche 1 bis 4, **dadurch gekennzeichnet, dass** die Übertragung des aktuellen Gerätezustands des genannten Hausgeräts (HG1 bis HGn) zu der Busleitungs-Steuereinrichtung (BM) erst vorgenommen wird, nachdem dem betreffenden Hausgerät (HG1 bis HGn) durch eine Registrierungsprozedur in dem lokalen Netz (LAN) eine zu dieser Zeit eindeutige Adresse zugeteilt ist.

6. Vorrichtung zum Ermitteln einer Unterbrechung einer Kommunikationsverbindung zwischen einem Hausgerät, welches in einem lokalen Netz, mit dem gegebenenfalls weitere Hausgeräte verbunden sind, an einer eine Busleitungs-Steuereinrichtung umfassenden Busleitungsanordnung angeschlossen ist, und der betreffenden Busleitungs-Steuereinrichtung, zu der von dem betreffenden Hausgerät Informationen über dessen jeweiligen Gerätezustand übertragen werden,
und zur Wiederaufnahme solcher Übertragungen auf eine Wiederherstellung der Kommunikationsverbindung nach Behebung der Unterbrechung,
wobei dem betreffenden Hausgerät zu seiner Identifizierung in dem lokalen Netz eine eindeutige Adresse zugeteilt wird, **dadurch gekennzeichnet,**
**dass** bei Übertragung der genannten Informationen lediglich in Form von Änderungsinformationen von dem genannten einen Hausgerät (HG1 bis HGn) über dessen jeweiligen Gerätezustand zu der Busleitungs-Steuereinrichtung (BM) die Busleitungs-Steuereinrichtung (BM) eine ein bestimmtes festgelegtes Kriterium des genannten Hausgerätes (HG1 bis HGn) zeitlich wiederholt abfragende Busleitungs-Steuereinrichtung (BM) ist, die derart ausgestaltet ist, dass sie bei Vorhandensein einer Kommunikationsverbindung zu dem betreffenden Hausgerät (HG1 bis HGn) von diesem jeweils ein Antwortsignal aufnimmt,
**dass** die genannte Busleitungs-Steuereinrichtung (BM) eine Bewertungseinrichtung umfasst, die derart ausgestaltet ist, dass sie auf das Ausbleiben eines Antwortsignals hin ein eine Unterbrechung der Kommunikationsverbindung zu dem betreffenden Hausgerät (HG1 bis HGn) anzeigendes Meldesignal bereitstellt,
und **dass** die Busleitungs-Steuereinrichtung (BM) ferner so ausgebildet ist, dass sie auf das genannte Meldesignal hin eine Suchoperation nach dem betreffenden Hausgerät (HG1 bis HGn), bei der ein generelles Abfragesignal (BS) ausgesendet wird, solange durchführt, bis von dem betreffenden Hausgerät (HG1 bis HGn) wieder ein Antwortsignal aufnehmbar ist,
und **dass** die Busleitungs-Steuereinrichtung (BM) ferner so ausgebildet ist, dass sie anschließend dem dann vorliegenden aktuellen Gerätezustand entsprechende Informationen aufzunehmen gestattet.

7. Vorrichtung nach Anspruch 6, **dadurch gekennzeichnet, dass** die Busleitungs-Steuereinrichtung (BM) eine das genannte bestimmte festgelegte Kriteriums des betreffenden Hausgeräts (HG1 bis HGn) zyklisch abfragende Steuereinrichtung ist.

8. Vorrichtung nach Anspruch 6 oder 7, **dadurch gekennzeichnet, dass** die Busleitungs-Steuereinrichtung (BM) eine den Gerätehauptzustand des genannten Hausgeräts (HG1 bis HGn) zyklisch wiederholt abfragende Steuereinrichtung ist.

9. Vorrichtung nach einem der Ansprüche 6 bis 8, **dadurch gekennzeichnet, dass** die Busteitungs-Steuereinrichtung (BM) eine die genannte Suchoperation zyklisch durchführende Steuereinrichtung ist.

10. Vorrichtung nach einem der Ansprüche 6 bis 9, **dadurch gekennzeichnet, dass** die Busleitungs-Steuereinrichtung (BM) so ausgebildet ist, dass sie vor Aufnahme des genannten aktuellen Zustands des betreffenden Hausgeräts (HG1 bis HGn) dieses in eine Registrierungsprozedur einbezieht, durch die das betreffende Hausgerät (HG1 bis HGn) in dem lokalen Netz (LAN) eine zu dieser Zeit eindeutige Adresse erhält, unter der es in dem lokalen Netz (LAN) erreichbar ist.

## Claims

1. Method of ascertaining an interruption of a communications connection between a domestic appliance, which is connected in a local network - with which optionally further domestic appliances are connected - with a bus conductor arrangement comprising a bus conductor control device, and the relevant bus conductor control device, to which data, from the relevant domestic appliance, about the respective appliance state thereof are transmitted, and for resuming such transmissions on restoration of the communications connection after elimination of the interruption, wherein the relevant domestic appliance is allocated a unique address for identification thereof in the local network, **characterised in that** on transmission of the said data merely in the form of change data from the said one domestic appliance (HG1 to HGn) about the respective appliance state thereof to the bus conductor control device (BM) a specific fixed criterion of the said domestic appliance (HG1 to HGn) is interrogated repeatedly over time by the bus conductor control device (BM), whereupon in the case of existence of the communications connection with the relevant domestic appliance (HG1 to HGn) an answer signal is transmitted from this to the bus conductor control device (BM), that the absence of such an answer signal is assessed as interruption of the communications connection with the relevant domestic appliance (HG1 to HGn), that thereupon a search operation is undertaken by the bus conductor control device (BM) for the relevant domestic appliance (HG1 to HGn), at which a general interrogation signal (BS) is transmitted, until an answer signal is again received from the relevant domestic appliance (HG1 to HGn) and that subsequently data corresponding to the then present current appliance state of the relevant domestic appliance (HG1 to HGn) are transmitted to the bus conductor control device (Bn).

2. Method according to claim 1, **characterised in that** the interrogation of the specific fixed criterion of the said domestic appliance (HG1 to HGn) is carried out cyclically.

3. Method according to claim 1 or 2, **characterised in that** the respective appliance main state of the said domestic appliance (HG1 to HGn) is interrogated as specific fixed criterion thereof.

4. Method according to one of claims 1 to 3, **characterised in that** the said search operation is carried out cyclically.

5. Method according to one of claims 1 to 4, **characterised in that** the transmission of the current appliance state of the said domestic appliance (HG1 to HGn) to the bus conductor control device (BM) is undertaken only after the relevant domestic appliance (HG1 to HGn) is allocated by a registration procedure in the local network (LAN) an address which is unique at this time.

6. Device for ascertaining an interruption of a communications connection between a domestic appliance, which is connected in a local network - with which optionally further domestic appliances are connected - with a bus conductor arrangement comprising a bus conductor control device, and the relevant bus conductor control device, to which data, from the relevant domestic appliance, about the respective appliance state thereof are transmitted, and for resuming such transmissions on restoration of the communications connection after elimination of the interruption, wherein the relevant domestic appliance is allocated a unique address for identification thereof in the local network, **characterised in that** on transmission of the said data merely in the form of change data from the said one domestic appliance (HG1 to HGn) about the respective appliance state thereof to the bus conductor control device (BM), the bus conductor control device (BM) is a bus conductor control device (BM), which interrogates repeatedly over time a specific fixed criterion of the said domestic appliance (HG1 to HGn) and which is designed in such a manner that in the presence of the communications connection with the relevant domestic appliance (HG1 to HGn) it receives an answer signal on each occasion from this, that the said bus conductor control device (BM) comprises an evaluating device which is designed in such a manner that in the absence of an answer signal it provides a report signal indicating an interruption of the communications connection with the relevant domestic appliance (HG1 to HGn), and that the bus conductor control device (BM) is additionally so constructed that in response to the said report signal it undertakes a search operation for the relevant domestic appliance (HG1 to HGn), at which a general interrogation signal (BS) is transmitted, until an answer signal is again receivable from the relevant domestic appliance (HG1 to HGn) and that the bus conductor control device (BM) is further so constructed that it subsequently allows reception of data corresponding with the then present current appliance state.

7. Device according to claim 6, **characterised in that** the bus conductor control device (BM) is a control device cyclically interrogating the said specific fixed criterion of the relevant domestic appliance (HG1 to HGn).

8. Device according to claim 6 or 7, **characterised in that** the bus conductor control device (BM) is a control device cyclically repeatedly interrogating the appliance main state of the said domestic appliance (HG1 to HGn).

9. Device according to one of claims 6 to 8, **characterised in that** the bus conductor control device (BM) is a control device cyclically carrying out the said search operation.

10. Device according to one of claims 6 to 9, **characterised in that** the bus conductor control device (BM) is so constructed that prior to reception of the said current state of the relevant domestic appliance (HG1 to HGn) it includes this in a registration procedure by which the relevant domestic appliance (HG1 to HGn) obtains in the local network (LAN) an address which is unique at this time and under which it is reachable in the local network (LAN).

## Revendications

1. Procédé pour déterminer une interruption d'une liaison de communication entre un appareil ménager, qui est connecté, dans un réseau local auquel sont reliés, le cas échéant, d'autres appareils ménagers, à un ensemble de lignes de bus incluant un contrôleur de lignes de bus, et ledit contrôleur de lignes de bus, auquel sont transmises, par ledit appareil ménager, des informations sur l'état respectif de celui-ci, et pour reprendre de telles transmissions suite à un rétablissement de la liaison de communication après suppression de l'interruption, une adresse univoque étant affectée audit appareil ménager aux fins de son identification dans le réseau local, **caractérisé en ce que**
lors de la transmission desdites informations uniquement sous la forme d'informations de modification depuis ledit un appareil ménager (HG1 à HGn), concernant l'état respectif de celui-ci, vers le contrôleur de lignes de bus (BM), le contrôleur de lignes de bus (BM) interroge, de manière répétée dans le temps, un certain critère déterminé dudit appareil ménager (HG1 à HGn), suite à quoi, en présence de la liaison de communication avec ledit appareil ménager (HG1 à HGn), celui-ci transmet un signal de réponse au contrôleur de lignes de bus (BM),
l'absence d'un tel signal de réponse est considérée comme étant une interruption de la liaison de communication avec ledit appareil ménager (HG1 à HGn),
ensuite, le contrôleur de lignes de bus (BM) effectue une opération de recherche dudit appareil ménager (HG1 à HGn), dans laquelle est émis un signal de requête général (BS), jusqu'à ce qu'un signal de réponse soit de nouveau reçu dudit appareil ménager (HG1 à HGn) et
ensuite, des informations correspondant à l'état actuel alors donné dudit appareil ménager (HG1 à HGn) sont transmises au contrôleur de lignes de bus (BM).

2. Procédé selon la revendication 1, **caractérisé en ce que** l'interrogation dudit certain critère déterminé dudit appareil ménager (HG1 à HGn) est effectuée de manière cyclique.

3. Procédé selon la revendication 1 ou 2, **caractérisé en ce qu'**est interrogé, en tant que certain critère déterminé dudit appareil ménager (HG1 à HGn), l'état principal respectif de celui-ci.

4. Procédé selon l'une des revendications 1 à 3, **caractérisé en ce que** ladite opération de recherche est effectuée de manière cyclique.

5. Procédé selon l'une des revendications 1 à 4, **caractérisé en ce que** la transmission de l'état actuel dudit appareil ménager (HG1 à HGn) au contrôleur de lignes de bus (BM) n'est opérée qu'après l'affectation d'une adresse, univoque à cet instant, audit appareil ménager (HG1 à HGn) par une procédure d'enregistrement dans le réseau local (LAN).

6. Dispositif pour déterminer une interruption d'une liaison de communication entre un appareil ménager, qui est connecté, dans un réseau local auquel sont reliés, le cas échéant, d'autres appareils ménagers, à un ensemble de lignes de bus incluant un contrôleur de lignes de bus, et ledit contrôleur de lignes de bus, auquel sont transmises, par ledit appareil ménager, des informations sur l'état respectif de celui-ci, et pour reprendre de telles transmissions suite à un rétablissement de la liaison de communication après suppression de l'interruption, une adresse univoque étant affectée audit appareil ménager aux fins de son identification dans le réseau local, **caractérisé en ce que**
lors de la transmission desdites informations uniquement sous la forme d'informations de modification depuis ledit un appareil ménager (HG1 à HGn), concernant l'état respectif de celui-ci, vers le contrôleur de lignes de bus (BM), le contrôleur de lignes de bus (BM) qui interroge un certain critère déterminé dudit appareil ménager (HG1 à HGn) de manière répétée dans le temps est un contrôleur de lignes de bus (BM) qui est aménagé de manière telle que, en présence d'une liaison de communication vers ledit appareil ménager (HG1 à HGn), il reçoit de celui-ci respectivement un signal de réponse,
ledit contrôleur de lignes de bus (BM) comprend un dispositif d'évaluation qui est aménagé de manière telle que, suite à l'absence d'un signal de réponse, il fournit un signal d'avertissement qui indique une interruption de la liaison de communication vers ledit appareil ménager (HG1 à HGn) et
le contrôleur de lignes de bus (BM) est, par ailleurs, réalisé de manière telle que, suite audit signal d'avertissement, il effectue une opération de recherche dudit appareil ménager (HG1 à HGn), dans laquelle un signal de requête général (BS) est émis, jusqu'à ce qu'un signal de réponse puisse de nouveau être reçu dudit appareil ménager (HG1 à HGn) et
le contrôleur de lignes de bus (BM) est en outre réalisé de manière telle qu'il permet ensuite la réception d'informations correspondant à l'état actuel alors donné dudit appareil ménager.

7. Procédé selon la revendication 6, **caractérisé en ce que** le contrôleur de lignes de bus (BM) est le contrôleur qui interroge de manière cyclique ledit certain critère déterminé dudit appareil ménager (HG1 à HGn).

8. Procédé selon la revendication 6 ou 7, **caractérisé en ce que** le contrôleur de lignes de bus (BM) est un contrôleur qui interroge de manière cyclique l'état principal dudit appareil ménager (HG1 à HGn).

9. Procédé selon l'une des revendications 6 à 8, **caractérisé en ce que** le contrôleur de lignes de bus (BM) est un contrôleur qui effectue ladite opération de recherche de manière cyclique.

10. Procédé selon l'une des revendications 6 à 9, **caractérisé en ce que** le contrôleur de lignes de bus (BM) est réalisé de manière telle que, avant la réception dudit état actuel dudit appareil ménager (HG1 à HGn), il fait intervenir celui-ci dans une procédure d'enregistrement par laquelle ledit appareil ménager (HG1 à HGn) reçoit, dans le réseau local (LAN), une adresse, univoque à cet instant, à laquelle il est accessible dans le réseau local (LAN).
